# EUROPEAN PATENT APPLICATION

(11) **EP 2 246 929 A1**
(43) Date of publication of application: **03.11.2010**
(21) Application number: 08870594.2
(22) Date of filing: 29.08.2008
(51) Int. Cl.: H01M 10/50, H01M 8/04

(54) **TEMPERATURE CONTROL MECHANISM**

(30) Priority: 18.01.2008 JP 2008009889
(71) Applicant: Toyota Jidosha Kabushiki Kaisha, Toyota-shi, Aichi 471-8571 (JP)
(72) Inventor: TAKAGI, Masaru, Toyota-shi Aichi 471-8571 (JP)
(74) Representative: Intes, Didier Gérard André
(86) International application number: PCT/JP2008/065562
(87) International publication number: WO 2009/090773

(57) **Abstract**

[Problems to be solved]

A temperature adjusting mechanism capable of efficiently performing temperature adjustment of a power source element is provided.

[Means for solving problems]

A temperature adjusting mechanism adjusting a temperature of a power source element (31), includes a case member (2) which houses the power source element and a first heat exchange medium (4) in liquid form performing heat exchange with the power source element; and a guide member (5) which is connected to the case member and forms at least a portion of a flow path (S) in which a second heat exchange medium flows. The guide member is formed of a material having a higher thermal conductivity than a thermal conductivity of outside air which is in contact with the case member.

## Description

### [TECHNICAL FIELD]

The present invention relates to a temperature adjusting mechanism for use in adjusting the temperature of a power source element.

### [BACKGROUND ART]

Structures for suppressing a rise in temperature of an assembled battery formed of a plurality of cells (secondary batteries) have conventionally been proposed (for example, see Patent Documents 1 to 3).

In a battery cooling apparatus disclosed in Patent Document 1, cooling tube for circulating a cooling liquid are placed within a container accommodating a plurality of batteries such that the plurality of batteries are cooled through the cooling tube. In structures disclosed in Patent Documents 2 and 3, air is supplied to a battery to cool the battery.
[Patent Document 1] Japanese Patent Laid-Open No. 11 (1999)-307139 (Fig. 1)
[Patent Document 2] Japanese Patent Laid-open No. 2004-14421 (Figs. 1 and 3)
[Patent Document 3] Japanese Patent Laid-open No. 2003-187772 (Fig. 1)

### [DISCLOSURE OF THE INVENTION]

### [PROBLEMS TO BE SOLVED BY THE INVENTION]

In the structures disclosed in Patent Documents 1 to 3, however, the batteries may not be cooled with sufficient efficiency.

It is thus an object of the present invention to provide a temperature adjusting mechanism capable of efficiently performing temperature adjustment of a power source element.

### [MEANS FOR SOLVING THE PROBLEMS]

The first aspect of the present invention is to provide a temperature adjusting mechanism adjusting a temperature of a power source element, comprising: a case member which houses the power source element and a first heat exchange medium in liquid form performing heat exchange with the power source element; and a guide member which is connected to the case member and forms at least a portion of a flow path in which a second heat exchange medium flows. The guide member is formed of a material having a higher thermal conductivity than a thermal conductivity of outside air which is in contact with the case member. The flow path is a path separated from an external.

The case member and the guide member can form the flow path. Therefore the second heat exchange medium can be in contact with the case member and the guide member.

In addition, one of the case member and the guide member can have a protruding portion which is in contact with the other of the case member and the guide member in the flow path. By providing the protruding portion, contacting area between the case member and the guide member can be increased and thus improve the heat transfer between the case member and the guide member. When the protruding portion is formed so as to extend in a direction in which the second heat exchange medium flows, flowing of the second heat exchange medium can be regulated.

A portion of the guide member, which is in contact with the case member, can have a larger thickness than a thickness of the other portions of the guide member. On the other hand, a portion of the guide member, which is in contact with the case member, can have a larger area than a thickness of the guide member. Therefore the guide member receives a large amount of heat from the case member through the portion of the guide member being in contact with the case member. For example, a flange portion can be provided to the case member and the guide member can have a flange portion which is in contact with the flange portion of the case member such that the flanges are placed one on another. Therefore a large amount of heat can be transferred between the case member and the guide member.

On the other hand, a duct member which allows flowing of the second heat exchange medium can be connected to the guide member. As the second heat exchange medium, a gas for use in cooling or heating the guide member can be used. In addition, the case member and the guide member can be made of metal.

The second aspect of the present invention is to provide a temperature adjusting mechanism adjusting a temperature of a power source apparatus. The power source apparatus includes a power source element, a first heat exchange medium in liquid form performing heat exchange with the power source element, and a case member which houses the power source element and the first heat exchange medium. The temperature adjusting mechanism comprises a guide member which is connected to the case member and forms at least a portion of a flow path in which a second heat exchange medium flows. The guide member is formed of a material having a higher thermal conductivity than a thermal conductivity of outside air which is in contact with the case member.

### [EFFECT OF THE INVENTION]

According to the first and second aspects of the present invention, since the guide member connected to the case member is formed of the material having a higher thermal conductivity than that of the outside air which is in contact with the case member, heat transfer can be efficiently performed between the case member and the guide member.

For example, the heat generated in the power source element is transferred to the guide member through the first heat exchange medium and the case member, thereby allowing efficient cooling of the powder source element. Since the second heat exchange medium is flowed in the guide member, the second heat exchange medium can be used to radiate the heat of the guide member. On the other hand, when the second heat exchange medium is used to heat the guide member and the case member, the power source element can be heated through the first heat exchange medium. Therefore, the temperature adjustment of the power source element can be achieved.

### [BRIEF DESCRIPTION OF DRAWINGS]

[Fig. 1] A perspective view showing the outer appearance of the structure of a battery pack provided with a temperature adjusting mechanism which is Embodiment 1 of the present invention.
[Fig. 2] A schematic diagram showing the internal structure of the battery pack in Embodiment 1.
[Fig. 3] A top view showing the temperature adjusting mechanism connected to the battery pack of Embodiment 1.
[Fig. 4] A schematic diagram showing a variation of Embodiment 1.
[Fig. 5] A section view showing the structure of a battery pack provided with a temperature adjusting mechanism which is Embodiment 2 of the present invention.
[Fig. 6] A front view showing the structure of a cover member in Embodiment 2.
[Fig. 7] A front view showing the structure of a cover member in a variation of Embodiment 2.

### [BEST MODE FOR CARRYING OUT THE INVENTION]

Preferred embodiments of the present invention will hereinafter be described.

### (Embodiment 1)

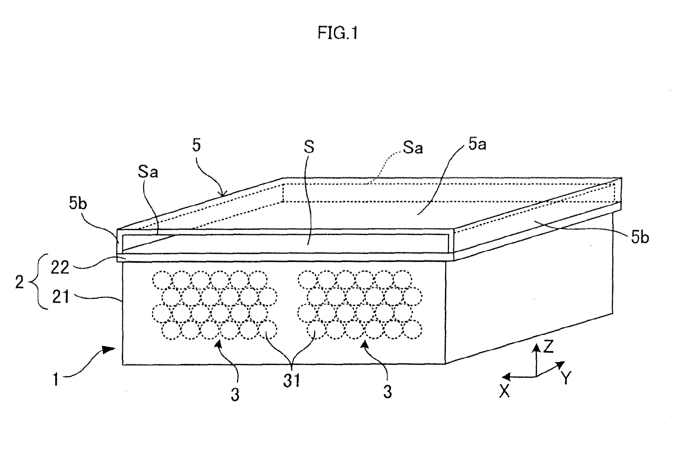

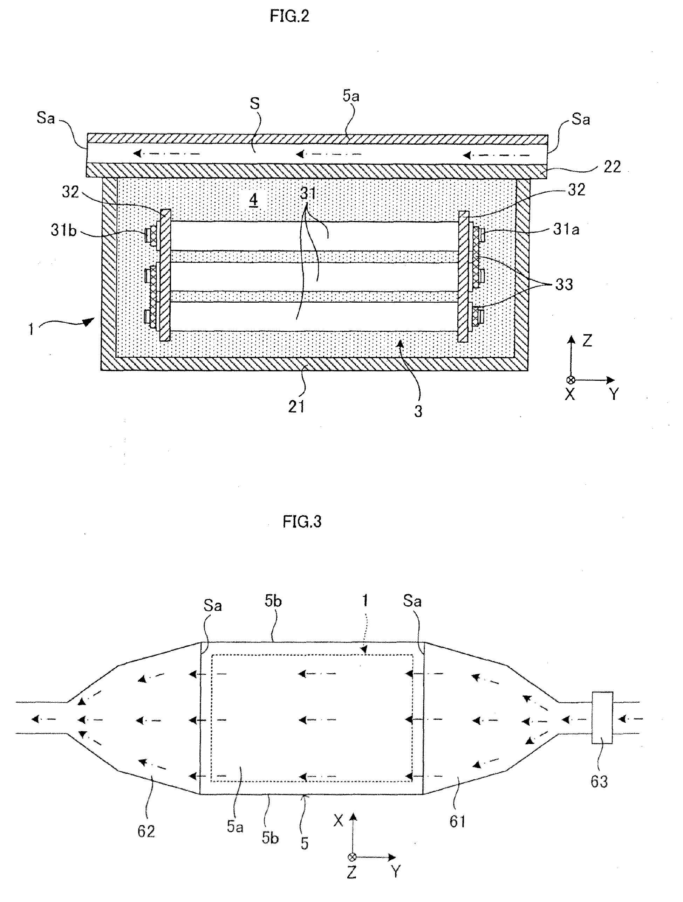

A cooling mechanism (a temperature adjusting mechanism) for a battery pack which is Embodiment 1 of the present invention will be described with reference to Figs. 1 to 3. Fig. 1 is a perspective view showing the outer appearance of part of the cooling mechanism for the battery pack. Fig. 2 is a schematic diagram showing the internal structure of the cooling mechanism for the battery pack. Fig. 3 is a top view showing the cooling mechanism for the battery pack. In Figs. 1 to 3, a Z axis indicates the direction of gravity, and an X axis and a Y axis indicate directions orthogonal to the Z direction and orthogonal to each other.

The battery pack 1 of Embodiment 1 is mounted on a vehicle (a so-called hybrid car). The output from the battery pack 1 can be used to run the vehicle, or the battery pack 1 can be charged with regenerative power converted from kinetic energy of the vehicle. The battery pack 1 can be mounted on equipment other than the vehicle.

In Fig. 1, the battery pack 1 has a case 2 and a battery unit 3 housed in the case 2. The case 2 has a housing member 21 having space for housing the battery unit 3 and a lid member 22 covering an opening portion of the housing member 21. The housing member 21 and the lid member 22 are made of metal such as aluminum or iron. The lid member 22 is fixed to the housing member 21 by fastening members such as screws or by welding. This causes the inside of the case 2 to be sealed. The method of fixing the lid member 22 to the housing member 21 is not limited thereto, and any method can be used as long as the lid member 22 can be fixed to the housing member 21.

The case 2 houses not only the battery unit 3 but also a heat exchange medium (a first heat exchange medium) 4 in liquid form for heat exchange with the battery unit 3 (see Fig. 2). The heat exchange medium 4 is in contact with the outer surface of the battery unit 3 and also in contact with all of the inner wall surfaces of the case 2. As later described, the heat exchange medium 4 is used to suppress a rise in temperature and a drop in temperature of the battery unit 3.

The heat exchange medium 4 is a fluid with insulation. The heat exchange medium 4 has the function of transferring heat generated in cells 31 to the case 2 to suppress a rise in temperature of the cells 31. The heat exchange medium 4 also has the function of receiving heat from the outside to heat the cells 31 to suppress a drop in temperature of the cells 31. For example, an insulating oil or a fluorine-containing inert fluid can be used as the heat exchange medium 4. As the fluorine-containing inert fluid, it is possible to use Fluorinert, Novec HFE (hydrofluoroether), and Novec1230 (manufactured by 3M).

If insulation treatment is performed on the outer surface of the battery unit 3, a fluid having insulation does not need to be used as the heat exchange medium 4. For example, a film having insulation can be formed on the outer surface of the battery unit 3. In this case, the heat exchange medium 4 having no insulation such as water can be used.

The battery unit 3 is formed of a plurality of cells (power source elements) 31 electrically connected to each other. The plurality of cells 31 are placed in parallel within the case 2. The cell 31 has a cylindrical shape and is realized by using a secondary battery such as a nickel metal hydride battery or a lithium-ion battery. Instead of the secondary battery, an electric double layer capacitor (capacitor) or a fuel cell can be used. The shape of the cell 31 is not limited to the cylinder, and another shape such as a square can be used.

As shown in Fig. 2, each of the cells 31 is supported at its both ends by a pair of support members 32 in the shape of a plate. These support members 32 are fixed to the case 2 by fastening members (not shown) such as screws. While the two support members 32 are used in Embodiment 1, these support members 32 can be formed integrally as one unit.

A positive-pole terminal 31a and a negative-pole terminal 31b are provided at the ends of each of the cells 31. These terminals 31a and 31b are connected to a power generation element housed in the cell 31. The power generation element includes a positive-pole plate, a negative-pole plate, and a separator, and is an element for performing charge and discharge. The terminals 31a and 31b at each of the cells 31 are connected to the terminals 31a and 31b of the adjacent cell 31 through a bus bar 33. In other words, the plurality of cells 31 can be connected electrically to each other in series through the bus bar 33 to supply a desired high power (for example, 200 V) required from the battery pack 1.

A cover member (a guide member) 5 is fixed to an upper face of the case 2 (the lid member 22). The cover member 5 is made of a material having a higher thermal conductivity than that of air. Specifically, the cover member 5 can be made of metal such as aluminum or iron. The cover member 5 has an upper-face portion 5a placed generally in parallel with the lid member 22 and side-face portions 5b extending to a direction generally orthogonal to the upper-face portion 5a.

An end portion of the side-face portion 5b is fixed to the lid member 22 by fastening members such as bolts or by welding. The fixing of the cover member 5 to the case 2 forms a predetermined space S surrounded by the upper-face portion 5a and the side-face portion 5b of the cover member 5, and the upper face of the lid member 22. The space S serves as space (a flow path) for allowing the movement of air (a second heat exchange medium), as described later.

Opening portions Sa formed by the cover member 5 and the lid member 22 are located at both ends of the space S in the Y-axis direction, that is, at both ends of the cover member 5 in the Y-axis direction. As shown in Fig. 3, a first duct 61 and a second duct 62 are connected to the two opening portions Sa. In other words, the first duct 61 and the second duct 62 are connected to the cover member 5 and the lid member 22. The first duct 61 and the second duct 62 can be formed of metal similarly to the cover member 5 or can be formed of resin.

As shown in Fig. 3, each of the first duct 61 and the second duct 62 has a width (a length in the X direction) which is the largest at the portion connected to the opening portion Sa and is reduced with distance from that connecting portion. The first duct 61 is provided with a fan 63. The fan 63 is driven by a driving mechanism such as a motor (not shown). The driving of the driving mechanism is controlled under a controller. The position where the fan 63 is provided is not limited to that shown in Fig. 3. In other words, the fan 63 can be provided at any position as long as the fan 63 can generate an airflow in a predetermined direction within the space S, as described later.

An opening portion (not shown) is formed at an end portion of the first duct 61 that is opposite to the end portion connected to the opening portion Sa. The opening portion faces the interior of the vehicle. The interior of the vehicle refers to the space in which a passenger of the vehicle rides or the space for housing baggage and the like (a so-called luggage compartment). On the other hand, an opening portion (not shown) is formed at an end portion of the second duct 62 that is opposed to the end portion connected to the opening portion Sa. The opening portion faces the outside of the vehicle.

In the abovementioned structure, when the fan 63 is driven, the air located in the interior of the vehicle is moved to the space S through the first duct 61. After the passage through the space S, the air is discharged to the outside of the vehicle through the second duct 62.

Arrows shown by alternate long and short dashed lines in Figs. 2 and 3 roughly indicate movement paths along which the air flows as described above.

In the battery pack 1 of Embodiment 1, the cells 31 may generate heat due to charge and discharge or the like. In this case, the heat exchange medium 4 in contact with the cells 31 absorbs the heat generated in the cells 31 through heat exchange with the cells 31. The heat exchange medium 4 holding the heat flows within the case 2 and reaches the inner wall surface of the case 2 to transfer the heat to the case 2. Since the case 2 is made of metal as described above, the case 2 easily receives the heat from the heat exchange medium 4. Since the heat exchange medium 4 in liquid form is used, the heat from the cells 31 can be transferred efficiently to the case 2 as compared with the case where a gas such as air is used.

The heat transferred to the case 2 can be discharged into the atmosphere (into the air). Since the cover member 5 is connected to the lid member 22 of the case 2, the heat transferred to the case 2 is transferred mainly to the cover member 5 in reality. The cover member 5 has a higher thermal conductivity than that of air, so that the heat transferred from the heat exchange medium, 4 to the case 2 is easily transferred to the cover member 5 rather than discharged into the atmosphere.

The heat of the case 2 is transferred to the cover member 5 as in Embodiment 1 to allow improvement in the heat radiation of the case 2. In other words, the heat radiation of the battery pack 1 can be improved. In addition, since the air is flowed through the space S formed by the cover member 5 and the case 2 (the lid member 22), the air passing through the space S cools the cover member 5 and the lid member 22.

Specifically, the air flowing into the space S absorbs the heat transferred to the cover member 5 and the lid member 22 through heat exchange with the cover member 5 and the lid member 22. The air holding the heat is discharged to the outside of the vehicle through the second duct 62. The abovementioned flow of the heat can improve the efficiency of the cooling of the battery pack 1 (more specifically, the cells 31).

While the outer surfaces of the case 2 are formed of flat surfaces in Embodiments 1, a plurality of fins in the shape of protrusions can be formed on the outer surfaces of the case 2 in order to improve the heat radiation of the cause 2. Specifically, the fins can be formed on the side face or the bottom face of the case 2.

In addition, protruding portions can be formed on the cover member 5 and the lid member 22 in order to generate a turbulent flow of air within the space S. Specifically, protruding portions can be formed on part of the surfaces of the cover member 5 and the lid member 22 that form the space S such that the protruding portions collide with the main airflow. The formation of such protruding portions can retain the air within the space S to improve the efficiency of the cooling through the air.

While the abovementioned description has been made in conjunction with the case where the heat generated in the cells 31 is discharged to the outside of the battery pack 1, the present invention is not limited thereto. Specifically, the battery pack 1 can be heated by using the cover member 5, the first duct 61, and the second duct 62. This situation will be described particularly.

For example, a heater (not shown) can be placed in the first duct 61 to heat the air directed to the space S. If the temperature in the interior of the vehicle is higher than the temperature of the battery pack 1, the air in the interior of the vehicle can be directed to the space S without heating the air by the heater.

The case 2 (especially the lid member 22) is heated by the air (the heated air) directed to the space S. Since the heated air reaches the lid member 22 without any leakage to the outside due to the presence of the first duct 61 and the cover member 5, the case 2 (the lid member 22) can be heated efficiently. The heating of the case 2 heats the heat exchange medium 4 housed in the case 2, and the cells 31 are heated through the heat exchange medium 4. This can suppress a reduction in temperature of the cells 31.

The cell 31 realized by the secondary battery can provide a desired output when the temperature thereof falls within a predetermined range of temperatures. Specifically, if the temperature of the cell 31 exceeds the upper limit value of the range of temperatures or is below the lower limit value of the range of temperatures, the output characteristics of the cell 31 are deteriorated. Thus, in order to suppress the deterioration of the output characteristics of the cell 31, the temperature of the cell 31 needs to be maintained within the range of temperatures.

To address this, the cover member 5 as in Embodiment 1 can be used to achieve the efficient temperature adjustment of the battery pack 1.

In the structure disclosed in Patent Document 1, since the cooling tube should be placed along the plurality of batteries within the container accommodating the batteries, the resulting structure is complicated. In addition, the plurality of cooling tubes are needed and thus the cost is increased. In contrast, Embodiment 1 only needs the provision of the cover 5 for the case 2 housing the heat exchange medium 4, so that the temperature adjustment of the cells 31 can be performed with the simple structure.

In the type of battery cooling with air as disclosed in Patent Documents 2 and 3, it is difficult to cool the battery efficiently. Specifically, the efficient cooling of the battery requires supply of a large amount of air to the battery, but this increases the driving amount of the fan for directing the air to the battery to cause an increase in the power consumption of the fan. In contrast, in Embodiment 1, the battery unit 3 and the heat exchange medium 4 are housed in the case 2, so that the heat generated in the cells 31 can be efficiently transferred to the case 2 through the heat exchange medium 4. This can improve the heat radiation of the cells 31. In addition, since the cover member 5 is used to absorb the heat of the case 2, the heat radiation of the case 2 can be improved without increasing the amount of supply of air as in Patent Documents 2 and 3.

While the cover member 5 is formed of the upper-face portion 5a and the two side-face portions 5b in Embodiment 1, the present invention is not limited thereto. Specifically, the cover member 5 can have a structure (a guide member) including a bottom-face portion which is in contact with the lid member 22 in addition to the upper-face portion 5a and the side-face portions 5b. In this case, the cover member 5 forms the abovementioned space S. Such a structure can also achieve the same effects as those in Embodiment 1 described above.

While the air is flowed to the space S in Embodiment 1, the present invention is not limited thereto. For example, a fluid (a second heat exchange medium) can be flowed instead of the air. In this case, it is necessary to use a duct for circulating the fluid and a pump for flowing the fluid. The duct for circulating the fluid corresponds to the cover member 5, the first duct 61, and the second duct 62 described in Embodiment 1, and is provided by connecting the first duct 61 to the second duct 62.

For cooling the battery pack 1, the fluid, which is to be directed to the space S, needs to be cooled previously in the circulating path of the fluid. In this case, a radiator or the like can be used to cool the fluid. On the other hand, for heating the battery pack 1, the fluid, which is directed to the space S, needs to be heated previously in the circulating path of the fluid. In this case, a heater or the like can be used to heat the fluid.

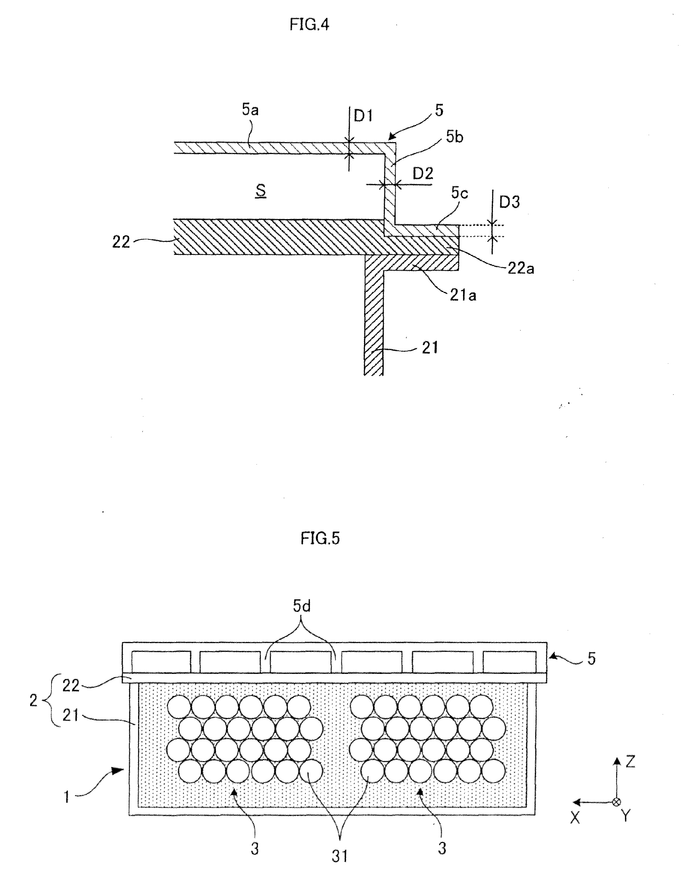

Next, a variation of Embodiment 1 will be described with reference to Fig. 4. The variation is provided by changing the structure for connecting the housing member 21, the lid member 22, and the cover member 5 of the structure of Embodiment 1 described above. Members having the same functions as those of the abovementioned members are designated with the same reference numerals, and detailed description thereof is omitted. In the following, some points different from Embodiment 1 will be described.

In Fig. 4, a flanges portion 21a is formed in an outer edge of a housing member 21, and a flange portion 22a is formed in an outer edge of a lid member 22. A flange portion 5c is formed in each end of a cover member 5. As shown in Fig. 4, the flange portions 21a, 22a, and 5c are placed one on another, are in contact with each other, and are fixed by welding.

The method of fixing the three flange portions 21a, 22a, and 5c to each other is not limited to the welding. In other words, any method can be used as long as the three flange portions 21a, 22a, and 5c can be fixed to each other.

As a specific example, it is possible to form hole portions in the three flange portions 21a, 22a, and 5c for passing a bolt therethrough and to fix the three flange portions 21a, 22a, and 5c with a bolt and a nut. It is also possible to use a mechanism which sandwiches the three flange portions 21a, 22a, and 5c from both end sides in the direction in which they are stacked. It is also possible to form the three flange portions 21a, 22a, and 5c such that the flange portions 21a, 22a, and 5c are placed one on another and are bent.

The provision of the three flange portions 21a, 22a, and 5c can easily fix the housing member 21, the lid member 22, and the cover member 5. In addition, as compared with the structure described in Embodiment 1, the area of contact between the lid member 22 and the cover member 5 can be increased by the provision of the flange portions 22a and 5c. Thus, the heat transferred to the lid member 22 can be efficiently transferred to the cover member 5, and the cover member 5 holding the heat can be cooled by the air flowing through a space S. As a result, the heat radiation of a case 2 (a battery pack 1) can be improved.

It is possible to use a structure in which the flange portion 22a is not provided for the lid member 22 and the flange portion 5c of the cover member 5 is in contact with the surface of the lid member 22. This structure can also increase the area of contact between the lid member 22 and the cover member 5.

When heated air flows through the space S to heat the battery pack 1, the heat transferred to the cover member 5 is easily transferred to the case 2 (the lid member 22). This facilitates the heating of the case 2, so that the heat exchange medium 4 and the cells 31 housed in the case 2 can be heated efficiently.

A thickness D2 of a side-face portion 5b of the cover member 5 can be larger than a thickness D1 of an upper-face portion 5a of the cover member 5. Such a structure allows the heat transferred to the case 2 (the lid member 22) to be transferred efficiently to the cover member 5. Specifically, since the side-face portion 5b of the cover member 5 is in direct contact with the lid member 22, the thickness D2 of the side-face portion 5b larger than the thickness of the other portions can increase the heat capacity in the side-face portion 5b. This can transfer a large amount of heat from the lid member 22 to the side-face portion 5b of the cover member 5.

Not only the thickness D2 of the side-face portion 5b but also a thickness D3 of the flange portion 5c can be larger than the thickness D1 of the upper-face portion 5a. This can further increase the amount of heat transferred from the lid member 22 to the cover member 5. In other words, the cooling efficiency of the case 2 can be improved. The thickness D2 of the side-face portion 5b and the thickness D3 of the flange portion 5c can be equal to each other or can be different from each other. However, when the thickness D2 and the thickness D3 are set to be the same, the cover member 5 can be easily manufactured.

The thickness of the cover member 5 is not limited to the abovementioned one. Specifically, it is essential only that the thickness of the portion of the cover member 5 that is in contact with the lid member 22 should be larger than the thickness of the other portions (the portions not in contact with the lid member 22). Such a structure can transfer a larger amount of heat between the cover member 5 and the lid member 22.

### (Embodiment 2)

Next, a temperature adjusting mechanism in Embodiment 2 of the present invention will be described with reference to Fig. 5. Fig. 5 is a schematic diagram showing a section of the temperature adjusting mechanism in Embodiment 2. Members having the same functions as those of the members described in Embodiment 1 are designated with the same reference numerals, and detailed description thereof is omitted. In the following, some points different from Embodiment 1 will be described.

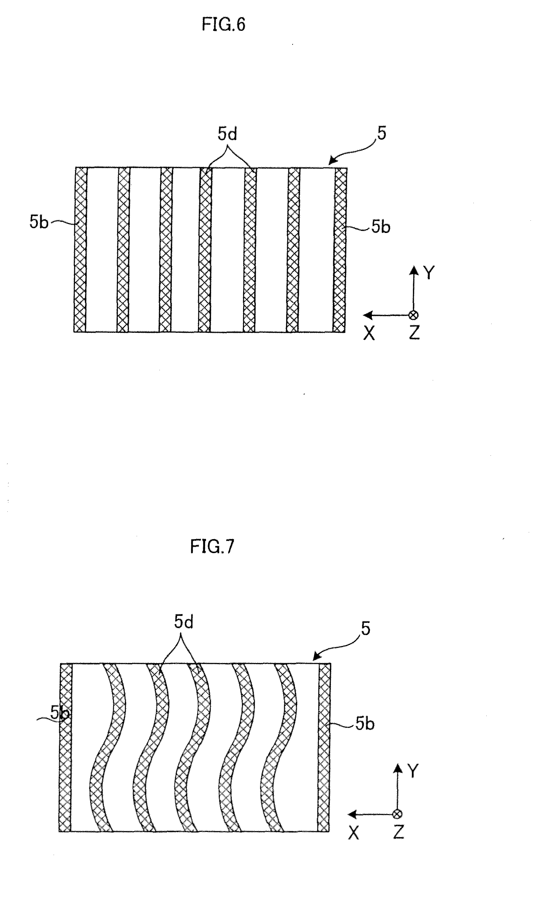

In Embodiment 2, a cover member 5 fixed to a case 2 (a lid member 22) has a plurality of protruding portions 5d. As shown in Fig. 6, the plurality of protruding portions 5d extend linearly in a Y direction. Fig. 6 is a diagram showing the cover member 5 viewed from the lid member 22. In Fig. 6, side-face portions 5b are located on both sides of the cover member 5, and the plurality of protruding portions 5d are placed between the two side-face portions 5b.

The plurality of protruding portions 5d are placed at equal intervals in a direction orthogonal to the direction (Y direction) along which air flows. The interval between the adjacent protruding portions 5d may not be equal to each other or can be different from each other. The number of the protruding portions 5d can be set as appropriate.

The end of each of the protruding portions 5d is in contact with an upper face of the lid member 22. The protruding portions 5d are provided in this manner to allow efficient movement of air within space (corresponding to the space S in Embodiment 1) formed by the cover member 5 and the lid member 22. Specifically, the air can be moved efficiently from the side of a first duct 61 to the side of a second duct 62 within the space.

Since each of the protruding portions 5d is in contact with the lid member 22, the heat transferred to the lid member 22 can also be transferred to the protruding portions 5d to improve the heat radiation of the lid member 22 (the cause 2).

All of the protruding portions 5d formed on the cover member 5 may not abut on the lid member 22, and at least one of the protruding portions 5d can be in contact with the lid member 22. The heat can be easily transferred from the lid member 22 to the cover member 5 in this case. If the ends of the protruding portions 5d are separated from the lid member 22, the airflow from the first duct 61 can also be regulated.

While the protruding portions 5d are formed on the cover member 5 in Embodiment 2, the protruding portions 5d can be formed on the lid member 22. In this case, the cover member 5 having the shape described in Embodiment 1 is used.

The protruding portions 5d can be provided as a component independent of the cover member 5. In this case, the protruding portions 5d can be formed of the same material as that of the cover member 5 or can be formed of a different material from that of the cover member 5. However, in order to bring the protruding portions 5d into contact with the lid member 22 to facilitate the transfer of the heat from the lid member 22, the protruding portions 5d are preferably made of a material having a higher thermal conductivity than that of the atmosphere.

While the protruding portions 5d are formed as shown in Fig. 6 in Embodiment 2, the present invention is not limited thereto. Specifically, any shape can be used as long as the air is moved from an opening portion Sa located at one end of the cover member 5 to an opening portion Sa located at the other end. Specifically, the protruding portions 5d can be formed as shown in Fig. 7. In the structure shown in Fig. 7, each of the protruding portions 5d extends in the Y direction and is formed to have a side face in a wavy shape having a curvature.

While the cover member 5 and the first and second ducts 61 and 62 are formed as independent components in Embodiments 1 and 2 described above, the present invention is not limited thereto. For example, the cover member 5 and at least one of the first and second ducts 61 and 62 can be formed integrally.

While Embodiments 1 and 2 described above have the structure in which the cover member 5 is fixed to the lid member 22, the cover member 5 can be fixed to the housing member 21. Specifically, while the cover member 5 is placed on the upper portion of the case 2 in Embodiments 1 and 2 described above, the cover member 5 can be placed on the side face or the bottom face of the case 2.

While the cover member 5 and the first and second ducts 61 and 62 are used to adjust the temperature of the battery pack 1 in Embodiments 1 and 2 described above, the present invention is not limited thereto. For example, when a junction box housing an electronic device is placed adjacently to the battery pack 1, the air can also be directed to the junction box to cool the electronic device. Example of the abovementioned electronic device include a controller for monitoring the temperature of the battery pack 1 (the cells 31) and a converter for converting the voltage value of the battery unit 3.

## Claims

1. A temperature adjusting mechanism adjusting a temperature of a power source element, comprising:
a case member which houses the power source element and a first heat exchange medium in liquid form performing heat exchange with the power source element; and
a guide member which is connected to the case member and forms at least a portion of a flow path in which a second heat exchange medium flows,
wherein the guide member is formed of a material having a higher thermal conductivity than a thermal conductivity of outside air which is in contact with the case member.

2. The temperature adjusting mechanism according to claim 1, wherein the case member and the guide member form the flow path.

3. The temperature adjusting mechanism according to claim 2, wherein one of the case member and the guide member has a protruding portion which is in contact with the other of the case member and the guide member in the flow path.

4. The temperature adjusting mechanism according to claim 3, wherein the protruding portion extends in a direction in which the second heat exchange medium flows.

5. The temperature adjusting mechanism according to any one of claims 1 to 4, wherein a portion of the guide member, which is in contact with the case member, has a larger thickness than a thickness of the other portions of the guide member.

6. The temperature adjusting mechanism according to any one of claims 1 to 5, wherein a portion of the guide member, which is in contact with the case member, has a larger area than a thickness of the guide member.

7. The temperature adjusting mechanism according to any one of claims 1 to 6, wherein the case member has a flange portion, and
wherein the guide member has a flange portion which is in contact with the flange portion of the case member such that the flanges are placed one on another.

8. The temperature adjusting mechanism according to any one of claims 1 to 7, further comprising a duct member which is connected to the guide member and allows flowing of the second heat exchange medium.

9. The temperature adjusting mechanism according to any one of claims 1 to 8, wherein the second heat exchange medium is a gas for use in cooling or heating the guide member.

10. The temperature adjusting mechanism according to any one of claims 1 to 9, wherein the case member and the guide member are made of metal.

11. A temperature adjusting mechanism adjusting a temperature of a power source apparatus,
the power source apparatus including a power source element,
a first heat exchange medium in liquid form performing heat exchange with the power source element, and a case member which houses the power source element and the first heat exchange medium,
the temperature adjusting mechanism comprising:
a guide member which is connected to the case member and forms at least a portion of a flow path in which a second heat exchange medium flows,
wherein the guide member is formed of a material having a higher thermal conductivity than a thermal conductivity of outside air which is in contact with the case member.
